# EUROPEAN PATENT SPECIFICATION

(11) **EP 3 627 523 B1**
(45) Date of publication and mention of the grant of the patent: **21.12.2022**
(21) Application number: 19197896.4
(22) Date of filing: 17.09.2019
(51) Int. Cl.: H01F 3/02, H01F 7/16, H01H 50/22

(54) **A DC MAGNETIC SYSTEM AND A POWER EQUIPMENT**
GLEICHSTROMMAGNETSYSTEM UND STROMAUSRÜSTUNG
SYSTÈME CC MAGNÉTIQUE ET ÉQUIPEMENT D'ALIMENTATION

(30) Priority: 17.09.2018 CN 201811081534
(43) Date of publication of application: 25.03.2020
(73) Proprietor: Eaton Electrical Ltd., Suzhou (CN)
(72) Inventor: HU, Zhengning, Suzhou, 215121 (CN); ZHANG, Luming, Suzhou, 215121 (CN); PING, Guoyong, Suzhou, 215121 (CN)
(74) Representative: Novagraaf Group

(56) References cited:
- WO-A1-2017/076447
- DE-A1- 10 214 992
- US-B2- 6 731 191

## Description

### TECHNICAL FIELD

The present invention relates to the technical field of power electronics, and in particular, to a DC magnetic system and a power equipment.

### BACKGROUND

A contactor, an electronic device commonly used in a power system, is able to close a contact using a magnetic field generated by a current flowing through a coil so as to control a load. Generally, a contactor mainly includes a DC electromagnetic system for transmission, a contact system for performing switching on and off, and an electric arc extinguishing device for extinguishing an electric arc. The DC electromagnetic system is one of the important components of the contactor, which generally includes a magnetic conductive body, an electromagnetic coil, a control circuit, and etc.

A conventional magnetic conductive body generally adopts the following two solutions: the first solution adopts a laminated yoke and a laminated armature. Costs are controllable in this solution; however, since the lamination needs to reach a certain thickness for riveting using rivets, the overall volume is relatively large, which in turn imposes limitations on the space when using this solution; the other solution adopts a bent and stamped yoke and an armature formed by machined members. The volume is adjustable in this solution; however, production costs of the armature is relatively high, resulting in difficulty in mass production and promoted use.

Attention is drawn to US 6,731,191 B2, which shows a DC electromagnet system, the magnet parts of which are made of stamped core stacks, wherein the magnet parts comprise a C-shaped magnet yoke and a rod-shaped armature, the yoke comprises a center web, two lateral legs and two leg ends, leg ends are fastened to lateral legs using joints, the leg ends extend to the proximity of the magnet armature, where they form a narrow passage for the armature.

Further, WO 2017/076447 A1 is directed to an electromagnet device, which comprises a magnet yoke having two lateral legs and an elongated base including a central portion, and an armature including a central leg and two arms, each of the arms including a portion extending along the movement axis (Y-axis) of the armature towards the magnet yoke.

DE 102 14 992 A1 discloses an AC electromagnet for use in electric switchgear, wherein the AC electromagnet includes a fixed, U-shaped magnet core positioned symmetrically to a central plane and a movable armature that is guided during its translational stroke by guide devices. The armature is T-shaped and positioned symmetrically to the magnet core, and has a cross leg to close the magnetic circuit and a central leg, the central leg being oriented toward the central web of the magnet core.

Therefore, a DC magnetic system of a smaller size with lower costs is currently desirable.

### SUMMARY

In accordance with the present invention, a system and a power equipment as set forth in claims 1 and 9 is provided. Further embodiments are inter alia disclosed in the dependent claims. With respect to the above problems in the prior art, the present invention provides a DC magnetic system, comprising a yoke and an armature, wherein the yoke comprises a U-shaped magnetic conductive member and an armature moving up and down in a limited space within the U-shaped magnetic conductive member, the armature being of a laminated structure. The U-shaped magnetic conductive member is of a single-piece bent structure.

The yoke further comprises a cover plate with a through hole, and the armature passing through the through hole of the cover plate so as to be inserted into the yoke.

Preferably, when moving up and down, a bottom surface of the armature is in direct contact with an inner side of a bottom surface of the magnetic conductive member.

Preferably, the yoke further comprises a seat connected to an inner side of a bottom surface of the U-shaped magnetic conductive member; and when moving up and down, the bottom surface of the armature is in contact with an upper surface of the seat.

Preferably, the seat has a laminated structure.

Preferably, the upper surface of the seat is of a platform-like structure, the armature having a flat bottom surface structure matching the upper surface of the seat in size.

Preferably, the seat is of a square structure having an inverted trapezoidal recess provided on the upper surface thereof, the armature having a trapezoidal lower portion structure matching the inverted trapezoidal recess of the upper surface of the seat in size.

Preferably, the DC magnetic system further comprises an induction coil provided on an outer side of the yoke and wound around a frame, and a control circuit connected to the induction coil and used for controlling a current in the induction coil.

Preferably, the DC magnetic system further comprises a conductor provided within a plastic frame above the induction coil; one end of the conductor being connected to the control circuit, and the other end thereof being connected to an external power source.

According to another aspect of the present invention, a power equipment is further provided, comprising the above DC magnetic system.

The DC magnetic system provided by the present invention adopts a magnetic conductive body formed by combining a single-piece bent yoke structure manufactured by means of a mature process and a laminated armature structure, which not only reduces the overall volume of the magnetic conductive body without increasing costs, but such a design also guarantees a relatively low energy consumption level. In addition, a preferred magnetic conductive member structure with a boss is also used in conjunction with the armature, thereby improving the yoke's capability in transmitting magnetic lines of force.

### BRIEF DESCRIPTION OF THE DRAWINGS

FIG. 1 is a schematic structural view of a part of a DC magnetic system according to the present invention;
FIG. 2 is a schematic structural view of an armature of a DC magnetic system according to the present invention;
FIG. 3 is a schematic structural view of a DC magnetic system after a part is removed according to the present invention;
FIG. 4 is a schematic structural view of a yoke of the DC system shown in FIG. 3;
FIG. 5 is a schematic structural view of a yoke of a DC magnetic system according to another embodiment of the present invention;
FIG. 6 is a schematic structural view of an armature matching the yoke shown in FIG. 5; and
FIG. 7 is a schematic structural view of a yoke of a DC magnetic system according to yet another embodiment of the present invention.

### DETAILED DESCRIPTION

To make objectives, technical solutions, and advantages of the present invention clearer and more comprehensible, the present invention will be further described in detail below through specific embodiments with reference to the accompanying drawings. It should be understood that the specific embodiments described herein are only intended to explain the present invention, rather than to limit the present invention.

The operating principle of a DC controlled contactor is different from that of an AC controlled contactor; in existing design solutions, when a contact housing frame of a DC controlled contactor is the same as that of an AC controlled contactor in size, the size of the DC control contactor is generally about 10% larger than that of the AC controlled contactor. In addition, the inventor has noticed that the reason for having a larger DC controlled contactor is mainly because the volume of a magnet in a magnetic conductive body is relatively large.

In order to reduce the size of the DC controlled contactor while maintaining an energy consumption level similar to the original low energy consumption level, the inventor has proposed a DC controlled contactor after research. The main design idea is that a magnetic conductive body of a DC magnetic system adopts a combination of a bent single-piece yoke and a laminated armature. Such a design reduces the volume of the DC magnetic system; at the same time, the system is ensured to have the same low energy consumption level as that of a DC magnetic system using the current solution. The description will be provided below with reference to specific embodiments.

A preferred embodiment of the present invention provides a DC magnetic system. The magnetic system comprises a yoke 1 for transmitting magnetic lines of force and constraining magnetic flux leakage from diffusing outwards; an armature 2 capable of moving up and down in a direction perpendicular to a lower surface of the yoke 1 under the reaction force; an induction coil 3 wound around a frame; and a control circuit 4 for controlling a current flowing through the induction coil 3.

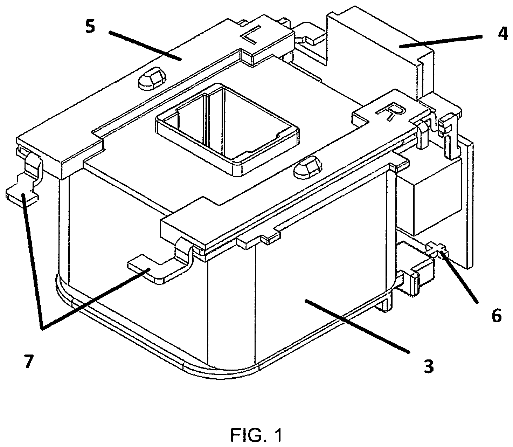

FIG. 1 is a schematic structural view of a part of the DC magnetic system according to the present invention. As shown in FIG. 1, the induction coil 3 (and the yoke 1 therein) in the DC system is of a square structure as a whole; strip-shaped plastic frames 5 are further symmetrically arranged above the square structure. A conductor 7 for connecting an external power source to the control circuit is provided within the plastic frames 5. One end of the conductor 7 is used for connecting to the external power source; the other end thereof is connected to the control circuit 4. In addition, a lead terminal 6 is further provided at a side, close to the control circuit 4, of the induction coil 3, and is used for electrically connecting the induction coil 3 to the control circuit 4.

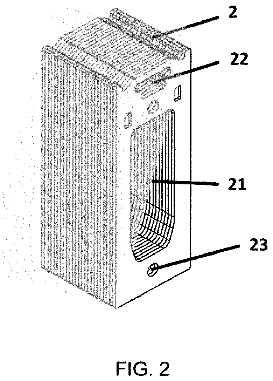

FIG. 2 is a schematic structural view of the armature of the DC magnetic system according to the present invention. As shown in FIG. 2, the armature 2 is of a rectangular structure formed by connecting (such as riveting) a plurality of stacked laminates; a middle portion is provided with a rectangular through hole 21; an upper portion is provided with a through hole 22 for disposing a connecting member; and a through hole 23 for riveting. In the DC magnetic system, a lower surface of the armature 2 is in contact with a bottom surface of the yoke 1, and because of the reaction force system, the armature 2 moves up and down in a direction perpendicular to the bottom surface of the yoke 1.

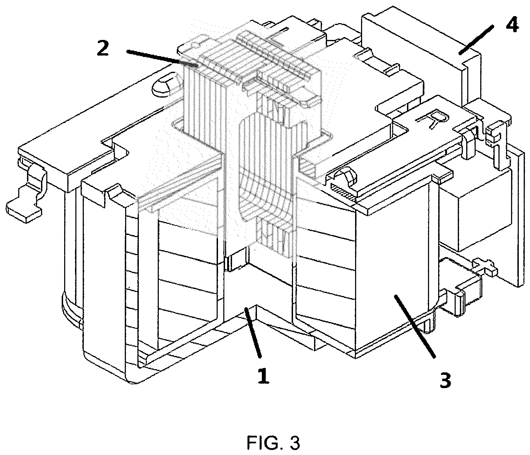

FIG. 3 is a schematic structural view of the DC magnetic system from which a part is removed out according to the present invention; the schematic structural view is obtained by by inserting the armature 2 of FIG. 2 into the part of the DC magnetic system of FIG. 1 and removing a corner thereof. As shown in FIG. 3, a bottom of the armature 2 is in contact with an inner side of the bottom surface of the yoke 1.

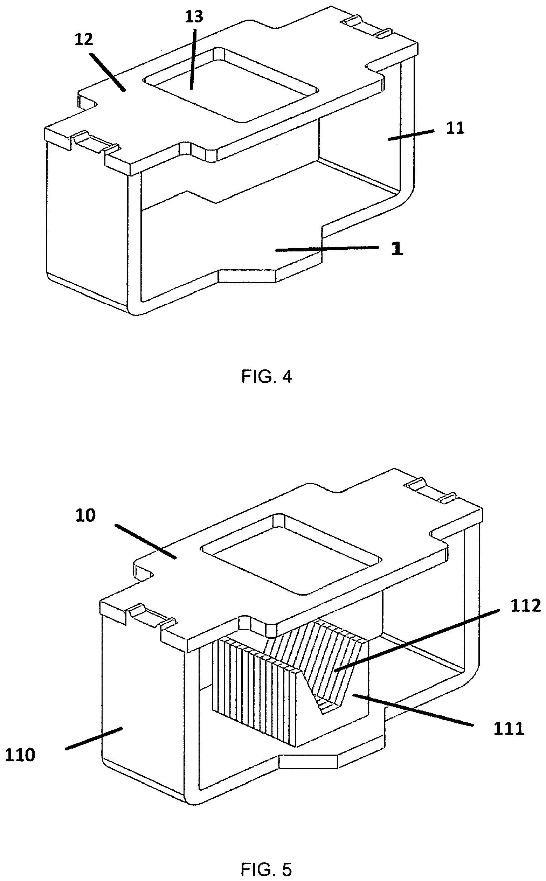

FIG. 4 is a schematic structural view of the yoke of the DC system of FIG. 1. As shown in FIG. 4, the yoke 1 comprises a bent U-shaped magnetic conductive member 11 and a cover plate 12 connected (such as being riveted) to a top of the U-shaped magnetic conductive member 11. The cover plate 12 is provided with a square through hole 13 matching the armature 2 in size. The armature 2 can be inserted into the square through hole 13. When the armature 2 passes through the square through hole 13 so as to be inserted into the U-shaped magnetic conductive member 11, a lower surface of the armature 2 is in contact with the inner side of the bottom surface of the U-shaped magnetic conductive member 11. In addition, when the DC magnetic system is in operation, the armature 2 can move up and down within the U-shaped magnetic conductive member 11 by passing through the square through hole 13 of the cover plate 12.

FIG. 5 is a schematic structural view of a yoke of a DC magnetic system according to another embodiment of the present invention. As shown in FIG. 5, the yoke structure 10 is similar to the yoke structure 1 shown in FIG. 4. Differences therebetween mainly include the following: a U-shaped magnetic conductive member 110 of the yoke structure 10 further includes a seat 111 connected (such as being inserted) to a bottom surface thereof; the seat 111 is formed by combining a plurality of stacked laminates; and the seat, as a whole, is of a square structure with an inverted trapezoidal recess 112 in an upper position.

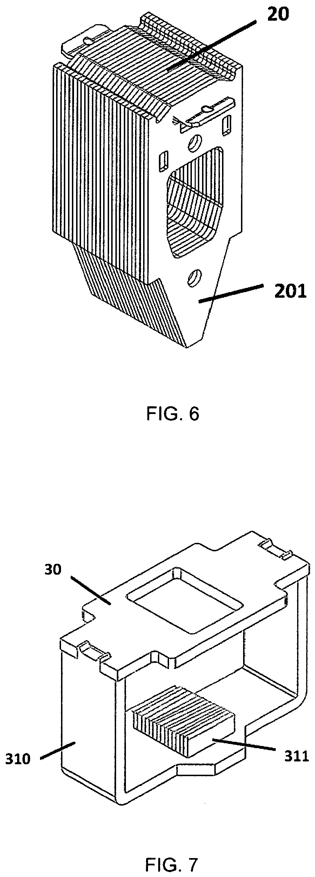

FIG. 6 is a schematic structural view of an armature matching the yoke shown in FIG. 5. As shown in FIG. 6, the armature structure 20 is similar to the armature 2 shown in FIG. 3. Differences therebetween mainly include the following: a lower portion of the armature structure 20 is of a trapezoidal structure 201, and the size of the trapezoidal structure 201 matches that of the trapezoidal recess 112 of the seat 111 shown in FIG. 5.

FIG. 7 is a schematic structural view of a yoke of a DC magnetic system according to yet another embodiment of the present invention. As shown in FIG. 7, the yoke structure 30 is similar to the yoke structure 1 shown in FIG. 4. Differences therebetween mainly include the following: a U-shaped magnetic conductive member 310 of the yoke structure 30 further comprises a seat 311 connected (such as being inserted) to a bottom surface thereof; and the seat 311 is formed by combining a plurality of stacked laminates; and the seat, as a whole, is of a rectangular boss structure matching the armature 2 in FIG. 3 in size.

Although a seat with a recess and a rectangular boss are adopted as examples to illustrate the yoke structure with the seat provided by the present invention in the above embodiments, a person of ordinary skill in the art shall understand that the shape of the seat provided by the present invention can be arbitrarily adjusted according to actual requirements so that the seat can be used in conjunction with the armature.

Although the present invention has been described by using the preferred embodiments, the present invention is not limited thereto; and various changes and modifications can be made without departing from the scope of the present invention.

## Claims

1. A DC magnetic system, comprising a yoke (1, 30) and an armature (2, 20), the yoke (1, 30) comprises a U-shaped magnetic conductive member (11, 110, 310) and the armature (2, 20) moving up and down in a limited space within the U-shaped magnetic conductive member (11, 110, 310), the armature (2, 20) being of a laminated structure, **characterized in that**
the U-shaped magnetic conductive member (11, 110, 310) is of a single-piece bent structure, and wherein the yoke (1, 30) further comprises a cover plate (12) with a through hole (13), the armature (2, 20) passing through the through hole (13) of the cover plate (12) so as to be inserted into the yoke (1, 30).

2. The DC magnetic system according to claim 1, wherein when moving up and down, a bottom surface of the armature (2, 20) is in direct contact with an inner side of a bottom surface of the magnetic conductive member (11, 110, 310).

3. The DC magnetic system according to claim 1, wherein the yoke (1, 30) further comprises a seat (111, 311) connected to an inner side of a bottom surface of the U-shaped magnetic conductive member (11, 110, 310); and when moving up and down, the bottom surface of the armature (2, 20) is in contact with an upper surface of the seat (111, 311).

4. The DC magnetic system according to claim 3, wherein the seat (111, 311) has a laminated structure.

5. The DC magnetic system according to claim 3, wherein the upper surface of the seat (111, 311) is of a platform-like structure, the armature (2, 20) having a flat bottom surface structure matching the upper surface of the seat (111, 311) in size.

6. The DC magnetic system according to claim 3, wherein the seat (111, 311) is of a square structure having an inverted trapezoidal recess (112) provided on the upper surface thereof, the armature (2, 20) having a trapezoidal lower portion structure (201) matching the inverted trapezoidal recess of the upper surface of the seat (111, 311) in size.

7. The DC magnetic system according to any one of claims 1 to 6, wherein the DC magnetic system further comprises an induction coil (3) provided on an outer side of the yoke (1, 30) and wound around a frame (5), and a control circuit (4) connected to the induction coil (3) and used for controlling a current in the induction coil (3).

8. The DC magnetic system according to claim 7, wherein the DC magnetic system further comprises a conductor (7) provided within a plastic frame above the induction coil (3); one end of the conductor (7) being connected to the control circuit (4), and the other end thereof being connectable to an external power source.

9. A power equipment, comprising the DC magnetic system according to any one of claims 1-8.

## Patentansprüche

1. DC-Magnetsystem, umfassend ein Joch (1, 30) und einen Anker (2, 20), wobei das Joch (1, 30) ein U-förmiges, magnetisches, leitfähiges Element (11, 110, 310) und den Anker (2, 20) umfasst, der sich in einem begrenzten Raum innerhalb des U-förmigen, magnetischen, leitfähigen Elements (11, 110, 310) auf und ab bewegt, wobei der Anker (2, 20) eine laminierte Struktur besitzt, **dadurch gekennzeichnet, dass** das U-förmige, magnetische, leitfähige Element (11, 110, 310) eine einstückige, gebogene Struktur besitzt, und wobei das Joch (1, 30) ferner eine Deckscheibe (12) mit einem Durchgangsloch (13) umfasst, wobei der Anker (2, 20) durch das Durchgangsloch (13) der Deckscheibe (12) hindurchführt, um in das Joch (1, 30) eingeführt zu werden.

2. DC-Magnetsystem nach Anspruch 1, wobei bei dem Auf- und Abbewegen eine untere Oberfläche des Ankers (2, 20) in direktem Kontakt mit einer inneren Seite einer unteren Oberfläche des magnetischen, leitfähigen Elements (11, 110, 310) steht.

3. DC-Magnetsystem nach Anspruch 1, wobei das Joch (1, 30) ferner einen Sitz (111, 311) umfasst, der mit einer inneren Seite einer unteren Oberfläche des U-förmigen, magnetischen, leitfähigen Elements (11, 110, 310) verbunden ist; und bei dem Auf- und Abbewegen die untere Oberfläche des Ankers (2, 20) in Kontakt mit einer oberen Oberfläche des Sitzes (111, 311) steht.

4. DC-Magnetsystem nach Anspruch 3, wobei der Sitz (111, 311) eine laminierte Struktur aufweist.

5. DC-Magnetsystem nach Anspruch 3, wobei die obere Oberfläche des Sitzes (111, 311) eine plattformartige Struktur besitzt, wobei der Anker (2, 20) eine flache Struktur an der unteren Oberfläche aufweist, die größenmäßig mit der oberen Oberfläche des Sitzes (111, 311) übereinstimmt.

6. DC-Magnetsystem nach Anspruch 3, wobei der Sitz (111, 311) eine quadratische Struktur besitzt, die eine invertierte, trapezförmige Aussparung (112) aufweist, die auf der oberen Oberfläche davon bereitgestellt ist, wobei der Anker (2, 20) eine trapezförmige Struktur (201) an dem unteren Abschnitt aufweist, die größenmäßig mit der invertierten, trapezförmigen Aussparung der oberen Oberfläche des Sitzes (111, 311) übereinstimmt.

7. DC-Magnetsystem nach einem der Ansprüche 1 bis 6, wobei das DC-Magnetsystem ferner eine Induktionsspule (3), die an einer äußeren Seite des Jochs (1, 30) bereitgestellt ist und um einen Rahmen (5) gewickelt ist, und eine Steuerschaltung (4) umfasst, die mit der Induktionsspule (3) verbunden und zum Steuern eines Stroms in der Induktionsspule (3) verwendet wird.

8. DC-Magnetsystem nach Anspruch 7, wobei das DC-Magnetsystem ferner einen Leiter (7) umfasst, der innerhalb eines Kunststoffrahmens über der Induktionsspule (3) bereitgestellt ist; wobei ein Ende des Leiters (7) mit der Steuerschaltung (4) verbunden ist und das andere Ende davon mit einer externen Stromquelle verbindbar ist.

9. Antriebsaggregat, umfassend das DC-Magnetsystem nach einem der Ansprüche 1 bis 8.

## Revendications

1. Système magnétique CC, comprenant une culasse (1, 30) et un induit (2, 20), la culasse (1, 30) comprend un élément conducteur magnétique en forme de U (11, 110, 310) et l'induit (2, 20) montant et descendant dans un espace limité au sein de l'élément conducteur magnétique en forme de U (11, 110, 310), l'induit (2, 20) étant d'une structure stratifiée, **caractérisé en ce que** l'élément conducteur magnétique en forme de U (11, 110, 310) est d'une structure pliée monobloc, et dans lequel la culasse (1, 30) comprend en outre une plaque de couverture (12) avec un trou traversant (13), l'induit (2, 20) passant à travers le trou traversant (13) de la plaque de couverture (12) de façon à être inséré dans la culasse (1, 30).

2. Système magnétique CC selon la revendication 1, dans lequel lorsqu'il monte et descend, une surface inférieure de l'induit (2, 20) est en contact direct avec un côté interne d'une surface inférieure de l'élément conducteur magnétique (11, 110, 310).

3. Système magnétique CC selon la revendication 1, dans lequel la culasse (1, 30) comprend en outre un support (111, 311) connecté à un côté interne d'une surface inférieure de l'élément conducteur magnétique en forme de U (11, 110, 310) ; et lorsqu'il monte et descend, la surface inférieure de l'induit (2, 20) est en contact avec une surface supérieure du support (111, 311).

4. Système magnétique CC selon la revendication 3, dans lequel le support (111, 311) a une structure stratifiée.

5. Système magnétique CC selon la revendication 3, dans lequel la surface supérieure du support (111, 311) est d'une structure de type plate-forme, l'induit (2, 20) ayant une structure de surface inférieure plate correspondant à la surface supérieure du support (111, 311) en taille.

6. Système magnétique CC selon la revendication 3, dans lequel le support (111, 311) est d'une structure carrée ayant un évidement trapézoïdal inversé (112) fourni sur la surface supérieure de celui-ci, l'induit (2, 20) ayant une structure de partie inférieure trapézoïdale (201) correspondant à l'évidement trapézoïdal inversé de la surface supérieure du support (111, 311) en taille.

7. Système magnétique CC selon l'une quelconque des revendications 1 à 6, dans lequel le système magnétique CC comprend en outre une bobine d'induction (3) fournie sur un côté externe de la culasse (1, 30) et enroulée autour d'un cadre (5), et un circuit de commande (4) connecté à la bobine d'induction (3) et utilisé pour commander un courant dans la bobine d'induction (3).

8. Système magnétique CC selon la revendication 7, dans lequel le système magnétique CC comprend en outre un conducteur (7) fourni au sein d'un cadre en plastique au-dessus de la bobine d'induction (3) ; une extrémité du conducteur (7) étant connectée au circuit de commande (4), et l'autre extrémité de celui-ci pouvant être connectée à une source de puissance externe.

9. Équipement de puissance, comprenant le système magnétique CC selon l'une quelconque des revendications 1 à 8.
